# EUROPEAN PATENT SPECIFICATION

(11) **EP 2 527 128 B1**
(45) Date of publication and mention of the grant of the patent: **02.09.2015**
(21) Application number: 12003739.5
(22) Date of filing: 10.05.2012
(51) Int. Cl.: B29C 65/50, F03D 1/06, F16B 11/00

(54) **A bonding method for a wind turbine multi-panel blade**
Bondingverfahren für eine Windturbinenschaufel mit mehreren Blättern
Procédé de liaison pour pale d'éolienne à panneaux multiples

(30) Priority: 24.05.2011 ES 201100576
(43) Date of publication of application: 28.11.2012
(73) Proprietor: Gamesa Innovation & Technology, S.L., 31621 Sarriguren (ES)
(72) Inventor: Velez Oria, Sergio, 48170 Zamuido - Bizkaia (ES); Zugasti Paramo, Amaia, 31621 Sarriguren (ES); Marin Martinez, Francisco Javier, 31621 Sarriguren (ES); Rodriguez Saiz, Emilio, 31621 Sarriguren (ES); Arocena De La Rua, Ion, 31621 Sarriguren (ES); Sanz Pascual, Eneko, 31621 Sarriguren (ES)

(56) References cited:
- WO-A2-2004/076852
- US-A1- 2009 155 084

## Description

### FIELD OF THE INVENTION

The present invention relates generally to wind turbine multi-panel blades and particularly to a bonding method for a wind turbine multi-panel blade and to a wind turbine multi-panel blade bonded using said method.

### BACKGROUND

Wind turbines include a rotor that supports a number of blades extending radially therefrom for capturing the kinetic energy of the wind and causing a rotational motion of a driving train coupled to an electric generator for producing electrical power.

The amount of energy produced by wind turbines is dependent on the rotor blade sweeping surface that receives the action from the wind and consequently increasing the length of the blades leads normally to an increase of the power output of the wind turbine.

However, the size of the blades for land-based wind farms is presently limited to some extent by transportation and infrastructure requirements. In particular, the size of bridges and tunnels limit the size of the blade maximum chord.

To solve the transportation problems posed particularly by lengthy blades the prior art teaches the division of the blade in two or more longitudinal sections provided with joining means, so that each section may be manufactured individually and all sections may be assembled at the wind turbine site. Examples of this prior art are the following.

DE 3 109 566 discloses a wind turbine blade subdivided into at least two longitudinal sections which are held together by an expanding bolt.

US 4,389,182 discloses a wind turbine blade subdivided into several longitudinal sections that are interconnected by tensioning members such as steel cables extending through the blade sections.

WO 2004076852 discloses a method to bond wind turbine parts using distancing pieces for a controlled flow of the adhesive between the parts prior to curing.

EP 1 244 873 A1 discloses a wind turbine blade subdivided into longitudinal sections that are joined by means of a butt joint comprising a number of clips arranged along the joint, having the respective ends fixed to the sections to be joined, and bolts for fixing said clips.

WO 20051100781, WO 2006/103307, WO 2007/051879 in the name of the applicant, disclose wind turbine blades subdivided into longitudinal sections having improved joining means.

There is also prior art teaching the division of the blade in several transversal sections in addition or independently to the division in longitudinal sections. Examples of this prior are the following.

EP 1 184 566 A1 discloses a wind turbine blade which is formed by assembling one, two or more longitudinal sections, each of which comprises a core formed by a longitudinal carbon-fibre tube on which a series of carbon fibre or fiberglass cross ribs are mounted and a cover formed by fiberglass or carbon-fibre joined to said ribs.

WO 01/46582 A2 discloses a wind turbine blade having a plurality of segmented elements attached to a load transmitting box spar and separated by elastic joins which enable the segments to move in relation to one another in order to minimize the tensile stress in the region of the blade in which the segments are located.

EP 1 965 074 in the name of the applicant discloses a wind turbine blade composed of two cap prefabricated panels and two web prefabricated panels placed side by side in a box shape and at least two shell longitudinal sections forming, respectively, the leading edge and the trailing edge of the corresponding blade section that are placed adjacently to a central spar section, the aerodynamic profile of the blade being defined by said cap panels and said shell panels.

One known method for bonding blade components of segmented blades such as those above-mentioned is an adhesive bonding. The typical technique for the application of the adhesive in one surface of said components is distributing the adhesive from a container to which is pumped from a mixing machine in which the dosage of the components of the adhesive is made and controlled.

This process has several drawbacks: it requires very demanding application times, the workers who perform the operation need protective equipment and a correct application on the bonding surface is difficult. On the other hand, said process involves the use of an excess of adhesive and therefore an increase of weight and cost.

The current trend in the wind industry to big rotor blades demands new rotor blades designs suitable for complying with the transportation requirements and with the quality manufacturing requirements involved by blades that can reach lengths of 100 m and chords of 8 m so there is a particular demand for improving the adhesive unions of segmented blades.

The present invention is intended to satisfy said demand.

### SUMMARY OF THE INVENTION

An object of the present invention is to provide a method for bonding prefabricated parts of a wind turbine blade that allows the control of the volume of the adhesive material and consequently a weight reduction.

Another object of the present invention is to provide a method for bonding prefabricated parts of a wind turbine blade that facilitates the application of the adhesive material on the bonding areas.

In one aspect these and other objects are met by a method for bonding a first and a second prefabricated parts of a wind turbine blade comprising the steps of:
- disposing bands of an adhesive material in a manageable uncured state following traces signaled on a bonding area of one of said parts, said adhesive material being able to flow in a curing stage in a controlled way, the width and height of said bands and the separation between said traces being determined so that a predetermined separation between said bands, comprised between 0-300 mm, remains after the bonding;
- bonding both parts under predetermined conditions of pressure and temperature.

In preferred embodiments the adhesive material used for disposing said bands is provided in one of the following formats: tape, strip, roll. Therefore it is used an adhesive material in a format that facilitates its application on the bonding surfaces as well as a full control of its weight.

In preferred embodiments the adhesive material used for disposing said bands is provided in blocks. Therefore it used an adhesive material in a format fully adapted for its application in bands.

In preferred embodiments, the adhesive material has a consistence in the uncured state that allows that said bands maintain its original geometry when they are not subjected to a pressure and that the height of said bands is reduced in a proportion comprised between the 25%-95% (preferably 50%-95%) of the original height when they are subjected to a pressure comprised between 0.05 and 2 MPa. Therefore it is used an adhesive material with the consistence needed for, on the one side, allowing its application in a semi-solid state and, on the other side, controlling its flow during the curing stage on the typical conditions where the bonding of prefabricated parts of a wind turbine blade takes place.

In preferred embodiments, the shear adhesion of said adhesive material in the cured state is greater than 15 MPa. Therefore it is used an adhesive material with the required shear adhesion for bonding prefabricated parts of a wind turbine blade.

In preferred embodiments, said predetermined conditions of pressure and temperature are the following: the pressure is comprised between 0.05 and 2 MPa and the temperature is comprised between 40°C and 100°C. These are the typical conditions for bonding prefabricated parts of a wind turbine blade so that the method according to the invention does not need any special equipment.

In preferred embodiments said adhesive material is a one-component adhesive material selected among one of the following: polyurethane, epoxy resins, vinyl esters or methacrylate. Hereby it is achieved a bonding method using well-known adhesive components.

In preferred embodiments the dimensions of said bands in the uncured state are: a width comprised between 30-150 mm, a height comprised between 2-40 mm and a separation between traces comprised between 20-300 mm. Therefore the method is applicable for bonding prefabricated parts of wind turbine blades of very different dimensions.

In preferred embodiments for bonding a first part belonging to an spar of the blade and a second part belonging to a shell of the blade, the dimensions of said bands in the uncured state are the dimensions mentioned in the preceding paragraph.

In preferred embodiments for bonding panels of an spar of the blade or for bonding shells of a blade, said bands have a width comprised between 30-150 mm, a height comprised between 2-25 mm and a separation between traces comprised between 20-50 mm.

The invention also refers to the use of the above-mentioned method for bonding prefabricated parts of a wind turbine blade and to a wind turbine blade comprising at least two prefabricated parts bonded using the above-mentioned method, whether if they belong to one module of the blade or if they belong to the whole blade.

Other features and advantages of the present invention will be understood from the following detailed description in relation with the enclosed drawings.

### BRIEF DESCRIPTION OF DRAWINGS

Figure 1 a shows in a schematic perspective view the main components of the inboard module of a wind turbine blade split in two modules.
Figure 1b shows in a schematic perspective view the main components of the spar of said inboard module.
Figure 2 is a cross-sectional view of said inboard module.

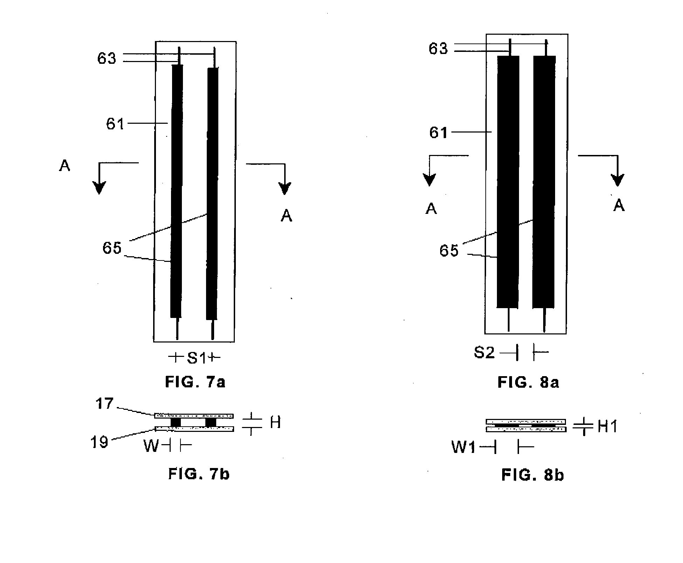

Figures 3a, 3b; 5a, 5b; 7a, 7b are, respectively, schematic plan and cross-sectional views by the plane A-A of the initial state of an adhesive bonding between two components of said inboard module according to three embodiments of this invention.
Figures 4a, 4b; 6a, 6b; 8a, 8b are, respectively, schematic plan and cross-sectional views by the plane A-A of the final state of an adhesive bonding between two components of said inboard module according to three embodiments of this invention.

### DETAILED DESCRIPTION OF PREFERRED EMBODIMENTS

In a multi-panel wind turbine blade, the whole blade may be split into, for example, an outboard and an inboard modules and each of them in several prefabricated parts for an assembly on site or in a factory.

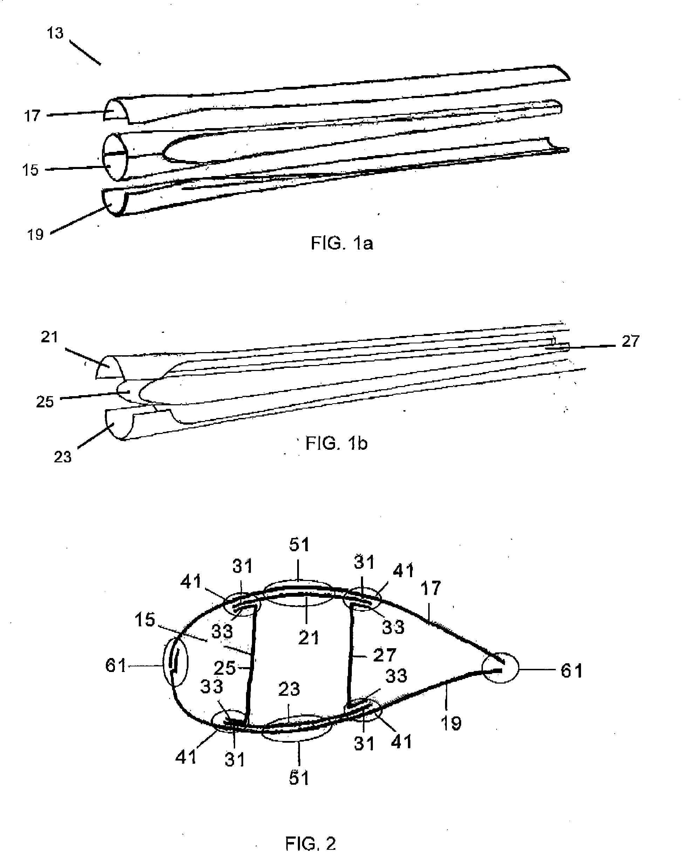

As illustrated in Figures 1a, 1b and 2 the inboard module 13 of the blade may be formed by upper and lower shells 17, 19 and an spar 15 that may also be formed by an upper cap 21, a lower cap 23, a leading edge web 25 and a trailing edge web 27.

All those spar single components are prefabricated and then assembled bonding the flanges 31, 33 of said components.

In a further step the inboard module is assembled bonding the prefabricated upper and lower shells 17, 19 to the spar 15 and bonding the borders of the upper and lower shells 17, 19.

In this inboard module there are therefore three different bonding areas: the bonding areas 41 In the flanges 31, 33 of the spar components, the bonding areas 51 between the spar caps 21, 23 and, respectively, the upper and lower shells 17, 19 and the bonding areas 61 between the borders of the upper and lower shells 17, 19.

Other multi-panel wind turbine blade configurations does not necessarily have the same three bonding areas. Therefore in the following we will refer separately to said bonding areas 41, 51, 61 and the skilled man will easily understand which of them would be applicable to any particular wind turbine blade configuration.

The basic idea of the present invention is using an adhesive material that:
- has a consistence that allows that it can be provided in formats such as tapes, strips, rolls or blocks;
- has a consistence that allows a full control of the placement of the adhesive in the bonding area in form of bands following a desired trace without being deformed in this operation (performed at ambient temperature), i.e. the adhesive material shall maintain its original geometry when it is not subjected to a pressure (and to a temperature higher than the ambient temperature at a wind turbine blade factory);
- has a consistence that allows that it can flow in a controlled way during the curing stage so that a final predetermined separation S2 between bands, comprised between 0-300 mm, can be achieved; in particular the height of the bands of adhesive materials shall be reduced in a proportion comprised between 25%-95% (preferably between 50%-95%) of the original height H when they are subjected to a pressure comprised between 0.05 and 2 MPa;
- has a suitable shear adhesion, in particular greater than 15 MPa, after performing the bonding process at a pressure comprised between 0.05 and 2 MPa and a temperature comprised between 40°C and 100°C.

In general terms it is considered that for the different bonding areas of a wind turbine blade, said bands shall have a width W comprised between 30-150mm, a height H comprised between 2-40mm and a separation S1 between traces comprised between 20-300 mm.

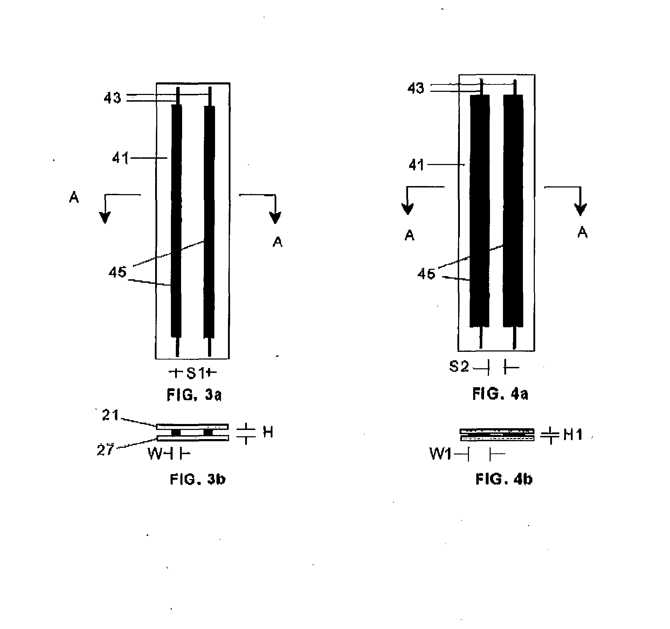

In embodiments of the present invention an adhesive bonding in the bonding area 41 between, for instance, the upper cap 21 and the trailing edge web 27 is carried out disposing bands 45 of an adhesive material in a manageable uncured state following traces 43 signaled on the bonding area 41 of the trailing edge web 27 with a separation S1 between them as shown in Figures 3a and 3b and joining the upper cap 21 and the trailing edge web 27 under predetermined conditions of pressure and temperature so that said adhesive is cured and said parts are bonded. The adhesive material is able to flow in the curing stage in a controlled way so that the width W and height H of said bands 45 and the separation S1 between said traces 43 are determined so that at the end of the bonding process the bands 45 have a predetermined width W1, height H1 and separation S2 between them as shown in Figures 4a and 4b.

In a particular embodiment of this invention for said bonding areas 41 between spar components, the bands 45, having a width W comprised between 30-150 mm and a height H comprised between 2-25 mm, have been disposed on the bonding area 41 with a separation S1 between the traces 43 comprised between 20-50 mm. After the bonding process, the width is increased in approximately a 50% and the height is decreased in approximately a 50%. These results show that using an adhesive of a suitable fluency the final shape of the adhesive bands can be controlled avoiding the typical losses of the known adhesive unions.

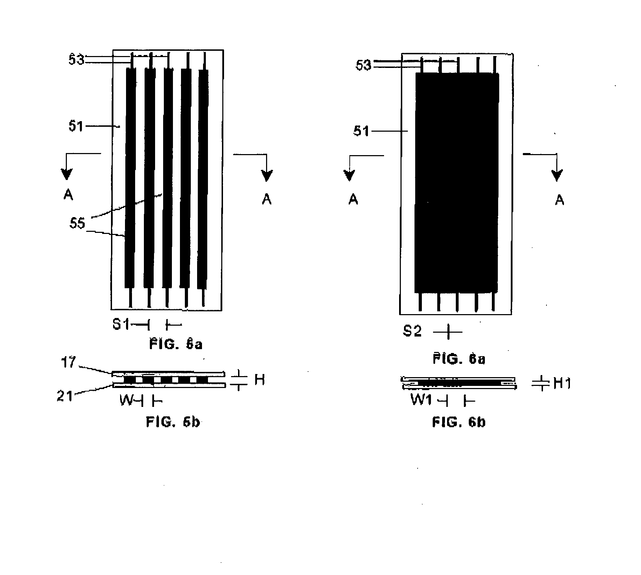

In embodiments of the present invention an adhesive bonding in the bonding area 51 between, for instance, the upper shell 17 and the upper cap 21 is carried out disposing bands 55 of an adhesive material in a manageable uncured state following traces 53 signaled on the bonding area 51 of the upper cap 21 with a separation S1 between them as shown in Figures 5a and 5b and joining the upper shell 17 and the upper cap 21 under predetermined conditions of pressure and temperature so that said adhesive is cured and said parts are bonded. Said adhesive material is able to flow in a curing stage in a controlled way so that the width W and the height H of said bands 55 and the separation S1 between said traces 53 are determined so that at the end of the bonding process the bands 55 have a predetermined width W1, height H1 and separation S2 between them as shown in Figures 6a and 6b.

In the case shown in Figures 6a and 6b there is no separation S2 between the final bands 55. This may be desirable if a continuous layer of adhesive is needed to avoid the buckling that otherwise would take place in those shell sections without adhesive. But it is also possible designing the union between shells and spar caps with bands 55 having a width W and a separation S1 between traces 53 selected for minimizing the volume of the adhesive if there are not bucking risks in the shell sections placed over the recesses between adhesive bands due to, for instance, a special design of the shells.

In embodiments of the present invention an adhesive bonding in a bonding area 61 between, for instance, the leading edge of the upper shell 17 and the leading edge of the lower shell 19 will be carried out in a similar manner to the bonding area 41 between spar components.

Although the present invention has been fully described in connection with preferred embodiments, it is evident that modifications may be introduced within the scope thereof, not considering this as limited by these embodiments, but by the contents of the following claims.

## Claims

1. A method for bonding a first and a second prefabricated parts of a wind turbine blade, comprising the steps of:
- disposing bands (45, 55, 65) of an adhesive material in a manageable uncured state following traces (43, 53, 63) signaled on a bonding area of one of said parts, said adhesive material being able to flow in a curing stage in a controlled way, the width (W) and height (H) of said bands (45, 55, 65) and the separation (S1) between said traces (43, 53, 63) being determined so that a predetermined separation (S2) between said bands (45, 55, 65), comprised between 0-300 mm, remains after the bonding;
- bonding both parts under predetermined conditions of pressure and temperature.

2. A method according to claim 1, wherein the adhesive material used for disposing said bands (45, 55, 65) is provided in one of the following formats: tape, strip, roll.

3. A method according to claim 1, wherein the adhesive material used for disposing said bands (45, 55, 65) is provided in blocks.

4. A method according to any of claims 1-3, wherein the adhesive material has a consistence in the uncured state that allows that:
- said bands (45, 55, 65) maintain its original geometry when they are not subjected to a pressure;
- the height of said bands is reduced in a proportion comprised between the 25%-95% of the original height (H) when they are subjected to a pressure comprised between 0.05 and 2 MPa.

5. A method according to claim 4, wherein the height of said bands Is reduced In a proportion comprised between the 50%-95% of the original height (H) when they are subjected to a pressure comprised between 0.05 and 2 MPa.

6. A method according to any of claims 1-5, wherein the shear adhesion of said adhesive material in the cured state is greater than 15 MPa.

7. A method according to any of claims 1-6, wherein said predetermined conditions of pressure and temperature are the following:
- the pressure is comprised between 0.05 and 2 MPa;
- the temperature is comprised between 40°C and 100°C.

8. A method according to any of claims 1-7, wherein said adhesive material is a one-component adhesive material selected among one of the following: polyurethane, epoxy resins, vinyl esters or methacrylate.

9. A method according to any of claims 1-8, wherein in the uncured state:
- said bands (45, 55, 65) have a width (W) comprised between 30-150 mm and a height (H) comprised between 2-40 mm:
- the separation (S1) between said traces (43, 53, 63) is comprised between 20-300 mm.

10. A method according to any of claims 1-9, wherein:
- said first and second prefabricated parts are panels (27, 21; 27, 23; 25, 21; 25, 23) of an spar (15) of the blade;
- said bands (45) have a height (H) comprised between 2-25 mm;
- the separation (S1) between said traces (43) is comprised between 20-50 mm.

11. A method according to any of claims 1-9, wherein said first prefabricated part belong to an spar (15) of the blade and said second prefabricated part is one shell (17, 19) of the blade.

12. A method according to any of claims 1-9, wherein:
- said first and second parts are shells (17, 19) of the blade;
- said bands (65) have a height (H) comprised between 2-25 mm;
- the separation (S1) between said traces (63) is comprised between 20-50 mm.

## Patentansprüche

1. Ein Verfahren zur Verbindung eines ersten und zweiten vorgefertigten Rotorblattteils einer Windenergieanlage, das folgende Schritte umfasst:
- Anbringen von Streifen (45, 55, 65) eines Klebematerials in einem handhabbaren ungehärteten Zustand unter Einhalten der Kennzeichnungen (43, 53, 63), die auf einem Verbindungsbereich auf einem dieser Teile markiert sind, wobei dieses Klebematerial auf kontrollierte Weise in einen Aushärtezustand übergehen können muss und die Breite (W) und Höhe (H) dieser Streifen (45, 55, 65) sowie der Abstand (S1) zwischen diesen Streifen (43, 53, 63) so festgelegt ist, dass der vorbestimmte Abstand (S2) zwischen den bewussten Streifen (45, 55, 65), der 0 bis300 mm betragen muss, nach der Verbindung aufrechterhalten bleibt;
- beide Teile werden unter vorbestimmten Druck- und Temperaturbedingungen miteinander verbunden.

2. Ein Verfahren gefäß Anspruch 1, bei dem das zum Anbringen der bewussten Streifen (45, 55, 65) benutzte Klebematerial in einem der folgenden Formate geliefert werden muss: Band, Streifen, Rolle.

3. Ein Verfahren gemäß Anspruch 1, bei dem das zum Anbringen der bewussten Streifen (45, 55, 65) benutzte Klebematerial in Blöcken geliefert werden muss.

4. Ein Verfahren gemäß den Ansprüchen 1-3, bei dem das Klebematerial in ungehärtetem Zustand eine Konsistenz hat, mit der Folgendes möglich ist:
- die bewussten Streifen (45, 55, 65) behalten ihre ursprüngliche Geometrie bei, wenn sie nicht einem Druck ausgesetzt werden;
- die Höhe der bewussten Streifen wird in einem Verhältnis von 25 bis 95 % der ursprünglichen Höhe (H) reduziert, wenn sie einem Druck von 0,05 bis 2 MPa ausgesetzt werden.

5. Ein Verfahren gemäß Anspruch 4, bei dem die Höhe der bewussten Streifen in einem Verhältnis von 50 bis 95 % der ursprünglichen Höhe (H) reduziert wird, wenn sie einem Druck von 0,05 bis 2 MPa ausgesetzt werden.

6. Ein Verfahren gemäß irgendeinem der Ansprüche 15, bei dem die reine Haftung des bewussten Klebematerials im ausgehärteten Zustand bei über 15 MPa liegt.

7. Ein Verfahren gemäß den Ansprüchen 1-6, bei dem die bewussten vorbestimmten Druck- und Temperaturbedingungen Folgende sind:
- der Druck liegt bei 0,05 bis 2 MPa;
- die Temperatur liegt bei 40°C bis 100°C.

8. Ein Verfahren gemäß den Ansprüchen 1-7, bei dem das bewusste Klebematerial ein Einkomponentenkleber aus einem der folgenden Materialien ist: Polyurethan, Epoxidharze, Vinylester oder Methacrylat.

9. Ein Verfahren gemäß irgendeinem der Ansprüche 1-8, bei dem im ungehärteten Zustand:
- die bewussten Streifen (45, 55, 65) eine Breite (W) von 30 bis 150 mm und eine Höhe (H) von 2 bis 40 mm haben;
- der Abstand (S1) zwischen den bewussten Streifen (43, 53, 63) bei 20 bis 300 mm liegt.

10. Ein Verfahren gemäß irgendeinem der Ansprüche 1-9, bei dem:
- die bewussten vorgefertigten Teile eins und zwei Paneele (27, 21; 27, 23; 25, 21; 25, 23) eines Holms (15) des Rotorblatts sind;
- die bewussten Streifen (45) eine Höhe (H) von 2 bis 25 mm haben;
- der Abstand (S1) zwischen den bewussten Streifen (43) bei 20 bis 50 mm liegt.

11. Ein Verfahren gemäß irgendeinem der Ansprüche 1-9, bei dem das bewusste erste vorgefertigte Teil zu einem Holm (15) des Rotorblatts gehört und das bewusste zweite vorgefertigte Teil eine Halbschale (17, 19) des Rotorblatts ist.

12. Ein Verfahren gemäß irgendeinem der Ansprüche 1-9, bei dem:
- das bewusste erste und zweite Teil Halbschalen (17, 19) des Rotorblatt sind;
- die bewussten Streifen (65) eine Höhe (H) von 2 bis 25 mm haben;
- der Abstand (S1) zwischen den bewussten Streifen (63) bei 20 bis 50 mm liegt.

## Revendications

1. Une méthode pour unir une première et une seconde pièces préfabriquées d'une pale d'éolienne, comprenant les étapes suivantes :
- positionnement de bandes (45, 55, 65) d'un matériau adhésif dans un état non durci contrôlable suivant des traces (43, 53, 63) signalées sur une zone d'union de l'une desdites pièces, ledit matériau adhésif étant capable de se répandre de manière contrôlée dans une étape de durcissement, la largeur (W) et la hauteur (H) de ces bandes (45, 55, 65) et la séparation (S1) entre lesdites traces (43, 53, 63) étant déterminées de sorte qu'une séparation prédéterminée (S2) entre lesdites bandes (45, 55, 65), comprise entre 0 et 300 mm, reste après l'union ;
- union des deux pièces sous des conditions prédéterminées de pression et de température

2. Une méthode selon la revendication 1, dans laquelle le matériau adhésif utilisé pour disposer lesdites bandes (45, 55, 65) est fourni sous l'une des formes suivantes : ruban, bande, rouleau.

3. Une méthode selon la revendication 1, dans laquelle le matériau adhésif utilisé pour disposer lesdites bandes (45, 55, 65) est fourni sous forme de blocs.

4. Une méthode selon l'une des revendications 1 à 3, dans laquelle le matériau adhésif possède à l'état non durci une consistance telle que :
- lesdites bandes (45, 55, 65) conservent leur géométrie d'origine tant qu'elles ne sont soumises à aucune pression ;
- la hauteur desdites bandes est réduite dans une proportion comprise entre 25 et 95 % de leur hauteur originale (H) lorsqu'elles sont soumises à une pression comprise entre 0,05 et 2 MPa.

5. Une méthode selon la revendication 4, dans laquelle la hauteur desdites bandes est réduite dans une proportion comprise entre 50 et 95 % de leur hauteur originale (H) lorsqu'elles sont soumises à une pression comprise entre 0,05 et 2 MPa.

6. Une méthode selon l'une des revendications 1 à 5, dans laquelle le décollement par cisaillement dudit matériau adhésif à l'état durci est supérieur à 15 MPa.

7. Une méthode selon l'une des revendications 1 à 6, dans laquelle lesdites conditions prédéterminées de pression et de température sont les suivantes :
- la pression est comprise entre 0,05 et 2 MPa ;
- la température est comprise entre 40 °C et 100 °C.

8. Une méthode selon l'une des revendications 1 à 7, dans laquelle ledit matériau adhésif est un matériau adhésif à un seul composant choisi parmi les suivants : polyuréthane, résines époxy, vinylesters ou méthacrylate.

9. Une méthode selon l'une des revendications 1 à 8, dans laquelle à l'état non durci :
- lesdites bandes (45, 55, 65) ont une largeur (W) comprise entre 30 et 150 mm et une hauteur (H) comprise entre 2 et 40 mm ;
- la séparation (S1) entre lesdites traces (43, 53, 63) est comprise entre 20 et 300 mm.

10. Une méthode selon l'une des revendications 1 à 9, dans laquelle :
- lesdites première et seconde pièces préfabriquées sont des panneaux (27, 21 ; 27, 23 ; 25, 21 ; 25, 23) d'un longeron (15) de la pale ;
- lesdites bandes (45) ont une hauteur (H) comprise entre 2 et 25 mm ;
- la séparation (S1) entre lesdites traces (43) est comprise entre 20 et 50 mm.

11. Une méthode selon l'une des revendications 1 à 9, dans laquelle ladite première pièce préfabriquée appartient à un longeron (15) de la pale et ladite seconde pièce préfabriquée est une coque (17, 19) de la pale.

12. Une méthode selon l'une des revendications 1 à 9, dans laquelle :
- lesdites première et seconde pièces sont des coques (17, 19) de la palle ;
- lesdites bandes (65) ont une hauteur (H) comprise entre 2 et 25 mm ;
- la séparation (51) entre lesdites traces (63) est comprise entre 20 et 50 mm.
